Europäisches Patentamt

European Patent Office

Office européen des brevets

(11) Numéro de publication: **0 235 053**

**A1**

(12) **DEMANDE DE BREVET EUROPEEN**

(21) Numéro de dépôt: **87420021.5**

(22) Date de dépôt: **21.01.87**

(51) Int. Cl.³: **G 21 C 19/10**

(30) Priorité: **22.01.86 FR 8601268**

(43) Date de publication de la demande:
**02.09.87 Bulletin 87/36**

(84) Etats contractants désignés:
**BE CH DE ES GB LI SE**

(71) Demandeur: **Transnucleaire**
**11,11bis rue Christophe Colomb**
**75008 Paris(FR)**

(72) Inventeur: **Blum, Paul**
**17 rue Charles de Gaulle**
**F-78860 St. Nom-la-Breteche(FR)**

(74) Mandataire: **Séraphin, Léon**
**PECHINEY 28, rue de Bonnel**
**F-69433 Lyon Cedex 3(FR)**

(54) **Dispositif de manutention multipinces avec limiteur individuel d'effort.**

(57) Dispositif de manutention destiné principalement aux opérations de traction et poussée des crayons combustibles nucléaires effectués lors du démantèlement des assemblages combustibles, comprenant une tête de manutention où sont aménagés une pluralité de cylindres (6) dans lesquels coulissent des pinces constituées de deux parties coaxiales (4,10), par l'intermédiaire de pistons solidaires (4a, 4b). Ces pistons délimitent trois espaces annulaires (A-B-C) alimentés par trois circuits (La, Lb, Lc) de fluide hydraulique réglables individuellement. Ces fluides permettent l'ouverture et les coulissement des pinces par rapport à la tête ainsi que le contrôle de l'effort maximum admissible en traction ou en compression sur les pinces.

A l'extrémité supérieure de chaque pince deux contacteurs fin de course donnent la situation individuelle de chacune d'elles.

FIGURE 1

(I)

(II)

EP 0 235 053 A1

## DISPOSITIF DE MANUTENTION MULTIPINCES AVEC
## LIMITEUR INDIVIDUEL D'EFFORT

DOMAINE TECHNIQUE

La présente invention concerne un dispositif applicable principalement
à la manutention d'un ensemble de crayons combustibles nucléaires. Ce
dispositif est constitué d'une tête de manutention comprenant une pluralité de pinces individuelles destinées à enserrer chacune simultanément
un crayon combustible par une de ses extrémités , chacune de ces pinces
comportant un dispositif limiteur d'effort (traction ou poussée) et un
dispositif indicateur de sa situation.

ETAT DE LA TECHNIQUE

Les assemblages combustibles nucléaires sont constitués de crayons combustibles ayant la forme de barreaux cylindriques de diamètre allant de
5 à 15 mm et de grande longueur (pouvant dépasser 4 m). Les crayons sont
disposés en réseau avec un pas de l'ordre de 1,5 fois leur diamètre. Ce
réseau est matérialisé par :

- deux embouts reliés par des entretoises qui occupent certains noeuds
  du réseau et qui sont fixées aux embouts par soudage, sertissage ou vissage.
Ces entretoises peuvent être constituées soit par des tubes à l'intérieur
desquels peuvent être introduites des barres de contrôle (cas des assemblages combustibles pour chaudière PWR), soit par des crayons à extrémités
filetées (cas des assemblages combustibles pour chaudière BWR). Entre les
entretoises sont disposés les crayons;

- des plaques ou grilles intermédiaires perpendiculaires aux crayons, percées à la maille du réseau, fixées aux entretoises et assurant ainsi
l'espacement des crayons combustibles qui occupent tous les autres noeuds
du réseau.

Les crayons combustibles, habituellement constitués de rondelles de matériau combustible entourées d'une enveloppe métallique assurant l'étanchéité et la rigidité du crayon, sont maintenus dans leur réseau par les
plaques ou grilles intermédiaires et peuvent glisser axialement jusqu'à buter sur un des embouts.

Au cours de la confection ou du démantèlement des assemblages combustibles, on peut être amené à manipuler les crayons par grappes, ce qui nécessite l'utilisation des têtes à pinces multiples pour les saisir par une de leurs extrémités. Le nombre de crayons ainsi manipulés simultanément peut atteindre 264 ou davantage.

Du fait de leur géométrie très allongée, les crayons sont relativement fragiles et déformables, ces défauts pouvant être aggravés après irradiation; il convient donc de faire les manipulations avec précaution pour éviter la rupture de la gaine métallique ou son flambage.

C'est notamment au cours du démantelement des assemblages combustibles que les crayons subissent le plus de contraintes : dans un premier temps on commence généralement par démonter et séparer l'un des embouts d'avec les entretoises, puis en maintenant les grilles intermédiaires, on extrait les crayons, généralement plusieurs à la fois.

Compte tenu des déformations possibles subies au cours d'irradiation par les crayons, de leur possibilité de glisser axialement jusqu'à venir en butée sur un embout de l'assemblage combustible, il se peut que leurs extrémités ne soient plus alignées et que l'effort d'arrachement varie considérablement d'un crayon à l'autre, et même atteigne une valeur excessive (risque de rupture) pour un ou plusieurs crayons.

Par exemple, pour un assemblage formé de 264 crayons de diamètre 9,5 mm formant un réseau carré 17x17 au pas de 12,5 mm, le niveau des extrémités des crayons peut varier de ± 2 cm autour d'une valeur moyenne et l'effort d'arrachement varier de 30 N à plus de 500 N, l'effort critique à partir duquel on peut craindre la rupture du crayon étant dans ce cas de l'ordre de 800 N.

Après extraction, les crayons sont stockés de façon compacte dans des conteneurs par l'intermédiaire d'un système de rangement. Lors de cette opération qui peut se faire en poussant les crayons dans le système, on peut craindre que les déformations subies par l'un d'eux en cours d'irradiation occasionnent un effort excessif qui risque de le faire flamber sous la poussée du manipulateur.

La manutention des crayons est faite généralement à l'aide d'une tête de manipulateur comportant une pluralité de dispositifs individuels de préhension ou pinces correspondant à tout ou partie des crayons combustibles à extraire ; un assemblage peut être ainsi démantelé en plusieurs opérations successives pour limiter le nombre de crayons manipulés à chaque fois. Habituellement, les crayons sont agrippés par des pinces les saisissant par des mors métalliques, ou par l'intermédiaire de matière caoutchoutée ; ces pinces étant habituellement solidaires d'une tête de manutention par une liaison rigide permettant des mouvements de traction et de poussée, l'effort transmis par la tête de manutention se répartit entre les divers crayons en fonction de la résistance particulière à la traction ou à la poussée de chacun, et l'un d'entre eux peut se rompre ou flamber sans qu'un effort anormal soit perceptible au niveau de la tête de manutention.

L'objet de l'invention est d'éviter ce risque de rupture qui met en jeu la sécurtié de la manutention de matières radioactives. Autrement dit, le dispositif recherché doit permettre de ne jamais dépasser la limite de rupture sur chacun des crayons manipulés lors du démantèlement des assemblages combustibles ou lors de leur réarrangement et compactage ultérieurs, de pouvoir régler cette valeur limite, tout en permettant d'individualiser le ou les crayons qui sont à l'origine du défaut.

Par ailleurs, le dispositif individuel recherché doit répondre à deux autres contraintes : être peu encombrant puisqu'il doit trouver sa place à l'intérieur de la maille resserrée des crayons et être manoeuvrable à distance.

DESCRIPTION DE L'INVENTION

La présente invention réside dans un dispositif destiné principalement au levage, à la tradction, à la poussée ou à des manutentions diverses de charges multiples ; il est constitué d'une tête de manutention comportant une pluralité de pinces autoserrantes disposées selon une maille de réseau pouvant être particulièrement serrée, commandées à distance par un fluide hydraulique ou non (par exemple air comprimé) ; il permet de limiter l'effort de traction ou poussée transmis à la charge, de localiser individuellement la charge sur laquelle se produit un dépassement d'effort, suite à cette indication d'asservir éventuellement toutes opérations pertinentes de sécurité ou autres, et d'encaisser les effets d'inertie sans détériorer les charges ; il est caractérisé en ce que :

- ladite tête de manutention, composée d'une ou de plusieurs pièces formant un bloc, comprend une pluralité de cylindres débouchant à l'extérieur par des ouvertures, de plus petit diamètre que celui du cylindre, par où émergent les extrémités des pinces et des canaux d'amenée de fluide de manoeuvre (hydraulique ou non) ;

- lesdites pinces autoserrantes comportent deux pièces coaxiales mobiles axialement l'une à l'intérieur de l'autre, coulissant elles-mêmes axialement à l'intérieur desdits cylindres à l'aide de pistons coaxiaux fixés sur ces deux pièces : ces deux parties sont prolongées par deux extrémités débouchant à l'extérieur de la tête de manutention, l'extrémité inférieure étant munie d'un dispositif de préhension actionné par les deux pièces, l'extrémité supérieure d'une came ;

- lesdits pistons coaxiaux délimitent à l'intérieur des cylindres trois compartiments annulaires alimentés chacun par trois réseaux de fluide de manoeuvre à pression réglable servant à la commande de l'ouverture des pinces, à la commande des mouvements entre les positions haute et basse des pinces et à l'obtention et au contrôle de la pression correspondant à l'effort maximum de traction ou poussée admissible sur les pinces ;

- des interrupteurs fin de course sont placés à proximité de chaque pince de façon à être manoeuvrables par lesdites cames.

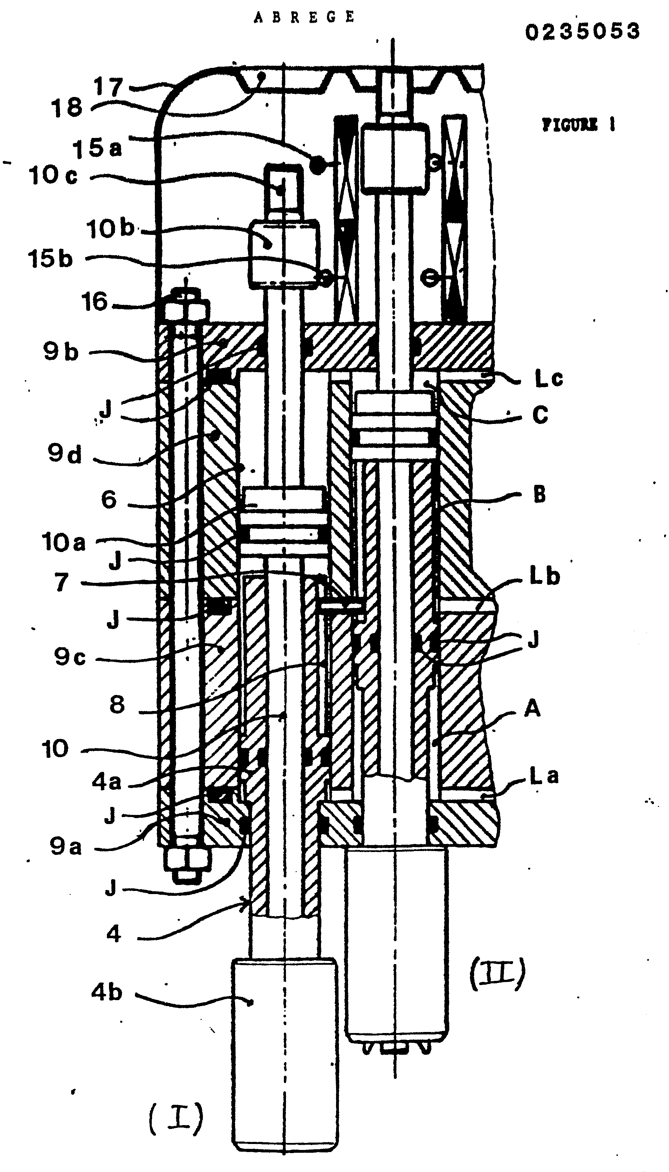

Le dispositif selon l'invention est particulièrement bien adapté aux opérations d'extractions et de rangements des crayons combustibles effectuées lors du démantèlement des assemblages combustibles et apparaîtra plus clairement grâce à la description du mode de réalisation particulier à cette application. Il est illustré par la figure 1 figurant une coupe du dispositif de manipulation où sont représentées seulement deux pinces, l'une en position basse et ouverte (I), l'autre en position haute et fermée (II).

On voit que la tête de manutention est composée, dans ce cas particulier, de 4 pièces (9a, 9b, 9c, 9d) assemblées par joints (J) et tirants (16) mais il pourrait l'être d'une seule pièce; dans les parties (9c)(9d) sont aménagés des cylindres identiques (6) dans lesquels coulisseront les pinces autoserrantes, et des conduits d'alimentation en fluides sous pression réglables séparément (La,Lb,Lc); dans les parties (9a)(9b) servant de couvercles aux cylindres sont ménagées des ouvertures de diamètres inférieurs à ceux des cylindres par où émergeront les extrémités des pinces. La tête peut être protégée par un carter (17) dans lequel des ouvertures (18) correspondent à l'emplacement des pinces.

Les pinces autoserrantes sont constituées de deux pièces (4) et (10) coaxiales coulissant l'une à l'intérieur de l'autre. L'extrémité basse (4b) de chacune d'elles émerge de la tête de manutention. A cette extrémité se trouve le dispositif de préhension autoserrant des crayons combustibles, non décrit, qui peut être de différents types, à mâchoires, à galets... et qui s'ouvre ou se ferme par le mouvement relatif des deux pièces (4) et (10). Dans le cas particulier de la figure, la pince est fermée quand le piston (10a) est au contact avec l'extrémité supérieure de la pièce (4), et ouverte quand ils sont écartés l'un de l'autre ; de plus un ressort de rappel situé dans l'extrémité (4b) de la pince tend à la maintenir fermée.

La partie extérieure (4) formant fourreau coulisse à l'intérieur du cylindre (6) par l'intermédiaire d'un piston coaxial solidaire (4a) qui peut venir en butée inférieure sur la plaque de fermeture (9a), et délimite un espace annulaire intérieur étanche (A), de volume variable alimenté en fluide par la canalisation (La). On peut disposer sur le fourreau (4) une rainure longitudinale (8) dans laquelle prend place une goupille (7) par ailleurs fixée dans le corps de la tête de manutention, de façon à conserver une orientation constante à la pince.

De même la pièce centrale (10) de la pince traverse la totalité du fourreau (4) où elle coulisse de façon étanche (joint) et émerge à la partie supérieure de la tête de façon également étanche par une ouverture percée dans la plaque (9b). Elle coulisse dans l'alésage (6) grâce à un piston coaxial solidaire (10a) qui peut venir en butée supérieure sur la plaque de fermeture (9b) et qui délimite un espace annulaire étanche supérieur (C) de volume variable alimenté en fluide par la canalisation (Lc). Un autre espace annulaire étanche intermédiaire (B) de volume variable est situé entre les pistons (10a) et (4a) et est alimenté en fluide par une canalisation (Lb). Les espaces annulaires d'une même catégorie A,B ou C sont reliés entre eux et chaque ensemble est relié à un dispositif extérieur de mise en pression du fluide. Ces dispositifs de type habituel
sont indépendants les uns des autres et réglables.

A l'extrémité supérieure émergente de la tige (10) sont fixées une came
(10b) et une anse (10c) servant de prise pour une éventuelle manipulation
de la pince par des moyens mécaniques à distance.

Sur la partie supérieure (9b) de la tête de manipulation, sont mis en
place à proximité de chaque pince, deux interrupteurs fin de course (15a)
et (15b) d'un type quelconque, pneumatique, électromécanique ou autre,
actionnables par la came (10b), et reliés à des voyants et/ou des systèmes d'asservissement et/ou de transmission de données et/ou de régulation et/ou d'alerte, etc...

PRINCIPE DE FONCTIONNEMENT

Il est donné à titre d'exemple non limitatif d'après le cas particulier
illustré par la figure 1 où les pinces autoserrantes sont telles qu'elles
sont en position fermée lorsque le piston (10a) et le sommet du fourreau
(4) sont en contact l'un de l'autre (position I) et que c'est l'extrémité (4b) du fourreau (4) qui assure la suspension et le serrage du crayon.
Avec un autre type de pince le procédé est identique; il suffit que les
valeurs relatives des pressions de fluide dans les différents espaces
annulaires A, B ou C soient correctement distribués pour assurer les
mouvements et contrôles voulus.

a) <u>Extraction des crayons</u>

L'opération de préhension et d'extraction des crayons combustibles sera
décrite en référence à la figure 1. Les séquences sont les suivantes :

1. Descente des pinces en position basse et ouverture des pinces.
   Les pressions à appliquer sont les suivantes :

   . en A : pression atmosphérique
   . en B : pression Pb telle qu'elle tienne (4) et (10a) disjoints (pince ouverte) en contrebalançant le ressort de rappel situé
            dans l'extrémité basse (4b) tendant à fermer la pince.

            Si la pince fonctionnait en sens inverse, la pression Pb
            serait nulle.

. en C : légère surpression, de l'ordre de 0,5.10$^5$ Pa.

Les pinces sont alors en position basse avec (4a) en butée sur (9a) et ouvertes. Tous les contacts (15b) sont en position (F) par exemple.

2. Descente de la tête de manutention, jusqu'à ce que toutes les pinces soient en butée sur la tête d'un crayon, les contacts (15b) sont en position (O).

3. Fermeture des pinces par relâchement de la pression Pb.

4. Obtention de la pression correspondant à la limite de l'effort maximum de traction admissible.

On met le compartiment C à la pression atmosphérique puis le compartiment A sous pression Pa telle qu'elle corresponde à une valeur de traction inférieure à la limite admissible sur les crayons. Au cours de cette mise en pression, les pinces, ayant tendance à monter, décollent dans un premier temps les crayons, ce qui permet de noter au passage l'effort de décollement (si la mise en pression est progressive), puis viennent en butée haute, manoeuvrant ainsi les contacteurs (15a) qui passent en position (F).

Ceci permet de vérifier que tous les crayons ont bien été décollés et d'avoir toutes les têtes des crayons dans un même plan.

5. Extraction des crayons : la tête de manutention est remontée progressivement; si la résistance à la traction d'un crayon est telle qu'elle atteint la pression Pa, le contact (15a) passe en position (O) transmettant ainsi une information permettant de localiser le crayon incriminé et/ou d'asservir des séquences opératoires ou de sécurité diverses, telles que l'arrêt de la remontée de la tête.

Par ailleurs, la pince peut continuer sa course sur une certaine longueur, ce qui permet d'encaisser les efforts d'inertie sans risque de rupture du crayon.

On peut alors si cela est pertinent soit relâcher mécaniquement le crayon en tirant sur l'anse (10c), soit accroître la pression Pa tout en ne dépassant pas la limite de rupture du crayon, soit procéder à tout autre opération utile.

b) <u>Rangement et stockage des crayons</u>

La manoeuvre consiste à introduire les crayons dans un conteneur pour stockage compact par l'intermédiaire d'un système de réarrangement des crayons. Le dispositif selon l'invention permet d'effectuer cette opération en poussant les crayons dans ledit système.

1. Présentation des extrémités inférieures des crayons à l'entrée du système de réarrangement obtenue en descendant la tête de manutention.

2. Obtention de la pression correspondant à la limite de l'effort maximum de poussée admissible et introduction des crayons par poussée dans ledit système : on met (A) à la pression atmosphérique et (C) à une pression Pc telle que la force appliquée sur la pince soit inférieure à la limite admissible en compression sur les crayons. Les contacts (15a) passent en position (O) et les contacts (15b) en position (F), ce qui indique que tous les crayons sont prêts à être poussés dans leurs logements de réarrangement. On descend la tête progressivement; en cas d'effort anormal sur un crayon, le contact (15b) correspondant passe en position (O) entraînant les mêmes types de conséquences que vu plus haut lors de l'extraction.

3. Fin de l'opération et relâchement des crayons.

Quand l'extrémité inférieure d'un premier crayon arrive en butée sur le fond du conteneur de stockage, l'interrupteur (15b) correspondant passe en position (O); on ramène alors la pression dans (C) à la pression atmosphérique et on abaisse la tête de manutention jusqu'à ce que tous les interrupteurs (15b) passent en position (O), puis on rétablit dans (C) la pression Pc de façon à repousser l'ensemble des crayons en butée dans le conteneur; on ouvre les pinces en mettant (B) sous la pression Pb et on peut alors remonter la tête de manutention.

Cet exemple permet d'illustrer le fonctionnement du dispositif dans un cas particulier; il peut aussi être appliqué à toute sorte d'opérations de levage ou de poussée ou de manutentions diverses (verticales ou horizontales) de charges multiples nécessitant ou non une limitation de l'effort subi par la charge, et une surveillance ou non du comportement individuel de chaque charge. Différents types de charges peuvent être traités en adaptant la forme des têtes de préhension et/ou le mécanisme de préhension, non décrit, qui est actionné par les deux éléments coaxiaux (4) et (10).

## REVENDICATIONS

1. Dispositif de manutention destiné principalement au levage, à la traction, à la poussée ou à des manutentions diverses, de charges multiples, comportant une tête de manutention contenant une pluralité de pinces auto-serrantes disposées selon une maille de réseau qui peut être de faible dimension, commandées à distance par un fluide de manoeuvre, permettant de limiter l'effort de traction ou poussée transmis à chacune des charges, de localiser individuellement la charge sur laquelle se produit un dépassement d'effort, et suite à cette indication d'asservir éventuellement des opérations pertinentes de sécurité ou autres, et d'encaisser les effets d'inertie sans détériorer les charges, et caractérisé en ce que :

- ladite tête de manutention, composée d'une ou de plusieurs pièces (9a, 9b, 9c, 9d) formant un bloc, comprend une pluralité de cylindres (6) chacun d'eux correspondant à une dite pince et débouchant à l'extérieur par des ouvertures, de plus petit diamètre que celui du cylindre, par où émergent les extrémités des pinces auto-serrantes, et des canaux d'amenée de fluide hydraulique (La, Lb, Lc) ;

- lesdites pinces auto-serrantes comportent un ressort de rappel les maintenant en position fermée et deux pièces coaxiales (4,10) mobiles axialement l'une à l'intérieur de l'autre, coulissant elles-mêmes axialement à l'intérieur desdits cylindres (6) à l'aide de pistons coaxiaux (4a, 10a) fixés sur ces deux pièces ; ces deux parties sont prolongées par deux extrémités débouchant à l'extérieur de la tête de manutention, l'extrémité inférieure (4b) étant munie d'un dispositif de préhension actionné par le mouvement relatif des deux pièces (4,10) et l'extrémité supérieure d'une came (10b) ;

- lesdits pistons coaxiaux délimitent à l'intérieur des cylindres trois compartiments annulaires (A,B,C) alimentés chacun par trois réseaux de fluide hydraulique à pression réglable servant à la commande d'ouverture des pinces, à la commande des mouvements entre les positions haute et basse des pinces et à l'obtention et au contrôle de la pression correspondant à l'effort maximum de traction ou poussée admissible sur les pinces ;

- des interrupteurs fin de course (15a, 15b) sont placés à proximité de chaque pince de façon à être manoeuvrables par lesdites cames (10b).

2. Dispositif selon la revendication 1, caractérisé en ce que l'extrémité supérieur de la pièce (10) est munie d'une anse (10c) pour manipuler à distance la pince par des moyens mécaniques.

3. Dispositif selon l'une quelconque des revendications 1 ou 2, caractérisé en ce que la partie supérieure de la tête de manutention est munie d'un carter (17) de protection dans lequel des ouvertures (18) correspondent à l'emplacement des pinces.

4. Dispositif selon l'une quelconque des revendications 1, 2 ou 3, caractérisé en ce qu'est disposée dans la pièce extérieure (4) de la pince, une rainure longitudinale (8) dans laquelle prend place une goupille (7) par ailleurs fixée dans le corps de la tête de manutention pour permettre de conserver l'orientation de la pièce.

5. Dispositif selon l'une quelconque des revendications 1 à 4, caractérisé en ce qu'il sert à extraire des crayons combustibles nucléaires d'un assemblage combustible et les introduire par poussée dans un conteneur de stockage compact par l'intermédiaire ou non d'un dispositif de réarrangement.

ABREGE

0235053

FIGURE 1

17
18
15 a
10 c
10 b
15 b
16
9 b
J
9 d
6
10 a
J
7
J
9 c
8
10
4 a
J
9 a
J
4
4 b

Lc
C
B
Lb
J
A
La

(I)

(II)

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 146 808 (WESTINGHOUSE ELECTRIC CO.) * Abrégé * --- | 1,5 | G 21 C 19/10 |
| A | US-A-4 539 174 (R.S. PATENAUDE) * Colonne 1, lignes 31-58; colonne 5, lignes 61-65 * --- | 1,5 | |
| A | US-A-4 482 520 (J.B. RANDAZZA) * Colonne 1, ligne 31 - colonne 2, ligne 4 * --- | 1,5 | |
| A | US-A-4 236 967 (V.I. BATJUKOV et al.) * Colonne 2, lignes 32-40 * ----- | 1,5 | |

**DOMAINES TECHNIQUES RECHERCHES (Int. Cl.4)**

G 21 C

Le présent rapport de recherche a été établi pour toutes les revendications

| Lieu de la recherche | Date d'achèvement de la recherche | Examinateur |
|---|---|---|
| LA HAYE | 08-04-1987 | GALANTI M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03.82